(19) Europäisches Patentamt
European Patent Office
Office européen des brevets

(11) **EP 1 526 296 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
*F16C 33/12* *(2006.01)*     *F16C 33/20* *(2006.01)*
*C08K 13/04* *(2006.01)*     *C08K 3/22* *(2006.01)*
*C08K 3/30* *(2006.01)*     *C08K 7/06* *(2006.01)*

(21) Anmeldenummer: **04022750.6**

(22) Anmeldetag: **24.09.2004**

(54) **Formkörper für gleitende Beanspruchung**

Shaped body for a sliding load

Corps moulé pour une charge coulissante

(84) Benannte Vertragsstaaten:
**DE FR GB**

(30) Priorität: **20.10.2003   DE 10349270**

(43) Veröffentlichungstag der Anmeldung:
**27.04.2005   Patentblatt 2005/17**

(73) Patentinhaber: **KS Gleitlager GmbH**
**68784 St. Leon-Rot (DE)**

(72) Erfinder: **Bickle, Wolfgang**
**68799 Reilingen (DE)**

(74) Vertreter: **Dreiss, Fuhlendorf, Steimle & Becker**
**Patentanwälte**
**Postfach 10 37 62**
**70032 Stuttgart (DE)**

(56) Entgegenhaltungen:
**EP-A- 0 232 922          WO-A-03/103955**
**DE-A1- 3 917 516        US-A- 5 643 683**

**Beschreibung**

Die Erfindung betrifft einen dreidimensionalen Formkörper für gleitende Beanspruchung bestehend aus einem Gleitschichtmaterial auf Kunststoffbasis mit einem Schmierstoff, wobei der Formkörper an Spritzgußteil ist. Die Abmessungen eines solchen dreidimensionalen Formkörpers, etwa eines Gleitschuhs oder einer Gleitleiste, betragen in jeder Dimension zumindest 1 mm, insbesondere zumindest 2 mm und weiter insbesondere zumindest 5 mm oder zumindest 6 mm. Selbstverständlich können die Abmessungen demgegenüber auch sehr viel größer sein.

DE 37 36 292 A1 offenbart eine separat herstellbare Gleitschicht auf Folienbasis, die dann über eine als Haftvermittler dienende Zwischenschicht oder direkt auf eine metallische Stützschicht aufbringbar ist. Als Material für die Gleitschicht ist fluorierter Kunststoff, insbesondere PTFE oder modifiziertes PTFE oder Polyimid oder PEEK als geeignet genannt. Keines der Ausführungsbeispiele umfasst PEEK. Der Gleitschicht kann gemäß dieser Druckschrift zur Verstärkung und/oder zur Verbesserung der Wärmeleitfähigkeit und/oder der Verschleißeigenschaften ein oder mehrere Füllstoffe zugegeben werden. Je nach Zielsetzung seien insbesondere Kohle, Aluminiumoxid, Keramikwerkstoffe, Glas, Bronze, Molybdändisulfid oder Siliziumcarbid eingelagert.

Gleitlagerverbundwerkstoffen mit einer sehr dünnen Gleitschicht auf Kunststoffbasis, die meist über eine poröse Haftvermittlerschicht an einer Stahlträgerschicht gehalten ist, haben in der Technik eine weite Verbreitung gefunden, und zwar für weitestreichende Anforderungsbereiche, insbesondere für Motoren oder motornahe Anwendungen, etwa im Hinblick-auf die Belastbarkeit, Chemikalienbeständigkeit oder die Temperaturbeständigkeit. Es sind Thermoplaste bekannt und erhältlich, bei denen jedoch die Temperaturbeständigkeit nur für Betriebstemperaturen bis ca. 90° C gewährleistet werden kann; es sind dies beispielsweise ABS, Hochdruck-Polyethylen (HD-PE), PVC, Polysulfon (PS) und andere. Es existiert aber auch eine Anzahl von sogenannten technischen Thermoplasten, die sich für Einsatztemperaturen bis ca. 150° C eignen, wie z. B. POM, PET, PA.

Die Voranmeldung der Anmelderin WO-A-03/103 955, die einen Stand der Technik nach Art.54(3) EPÜ bildet, offenbart einen Formkörper (als Prüfling eines Block-Ring-Prüfstandes) aus einem Gleitschichtmaterial. Das Material enthält PEEK, Schmierstoff in Form von Zinksulfid oder Bariumsulfat, Titandioxid und Kohlenstofffasern. Es wird als Komponente eines Gleitlagenverbundwerkstoffs verwendet.

Die vorliegende Erfindung betrifft jedoch keine Gleitlagerverbundwerkstoffe mit einer Stahlträgerschicht und einer sehr dünnen Gleitschicht, sondern dreidimensionale Formkörper der eingangs genannten Art, die im wesentlichen aus Gleitschichtmaterial auf Kunststoffbasis bestehen, bei denen wenigstens die Dickendimension zumindest 1 mm, insbesondere zumindest 2 mm, insbesondere zumindest 5 mm und weiter insbesondere zumindest 6 mm beträgt.

Der Erfindung liegt die Aufgabe zugrunde, einen dreidimensionalen Formkörper zu schaffen, der sehr gute tribologische Eigenschaften und eine hohe Verschleißbeständigkeit auch unter hoher Belastung sowie eine hohe Chemikalienbeständigkeit aufweist.

Diese Aufgabe wird durch einen dreidimensionalen Formkörper mit den Merkmalen des Anspruchs 1 gelöst.

Der Formkörper mit Polyetheretherketon (PEEK) oder mit Polyphenylensulfid (PPS) als matrixbildender Kunststoffkomponente erweist sich in Verbindung mit den weiteren beanspruchten Komponenten als hochtemperaturstabil, d. h. er kann bei Temperaturen oberhalb von 180° C, beispielsweise 190 bis 250° C dauerhaft eingesetzt werden. Das Haltevermögen einer Matrix aus PPS ist demjenigen einer Matrix aus PEEK aber unterlegen; auch bei etwaigen Umformvorgängen ist PPS PEEK unterlegen und kommt nicht ganz an die hervorragende tribologische Leistungsfähigkeit von PEEK heran. PPS ist aber kostengünstiger herstellbar und eignet sich für viele Anwendungen bei moderaten Temperaturen und bei geringfügigerer Umformung hervorragend für den Einsatz als Formkörper für gleitende Beanspruchung. Ähnliches gilt für PA als matrixbildende Kunststoffkomponente.

Die vorliegende Erfindung schließt zwar nicht aus, dass neben PEEK oder PPS oder PA als matrixbildender Kunststoffkomponente noch ein oder mehrere weitere Thermoplaste in dem Gleitschichtmaterial enthalten sein dürfen. Ihr Anteil sollte aber nicht mehr als 20 Gew.-%, insbesondere nicht mehr als 10 Gew.-% des Anteils der Kunststoffkomponente in dem Gleitschichtmaterial betragen. Vorzugsweise ist die Kunststoffkomponente zu 100 % von PEEK oder PPS oder PA gebildet.

Es wäre auch denkbar, dass der Formkörper einen die Oberfläche bildenden Schichtbereich auf Basis von PEEK und daran angrenzend einen Trägerbereich auf Basis eines anderen Kunststoffmaterials, etwa PPS oder PA. Es stünden dann die hervorragenden Eigenschaften von PEEK an der gleitend beanspruchten Oberfläche zur Verfügung.

Es wurde mit der Erfindung festgestellt, dass der Teilchengröße des Schmierstoffs in Form von Zinksulfid und/ oder Bariumsulfat und der härtenden Komponente in Form von Titandioxid, welche der matrixbildenden Kunststoffkomponente zugesetzt sind, eine wichtige Bedeutung zukommt. Unter Verwendung von feinen Teilchen im beanspruchten Bereich lässt sich eine "dichte" homogene Verteilung dieser Stoffe in der Kunststoffmatrix erreichen.' Es wurde festgestellt, dass sich auf diese Weise eine Steigerung der Leistungsfähigkeit des Formkörpers sowohl im Hinblick auf geringe Verschleißraten als auch im Hinblick auf einen überraschend günstigen Reibkoeffizienten erreichen lässt. Die erwähnte härtende Komponente und der Schmierstoff des Gleitschichtmaterials liegen vorzugsweise in Form feiner Teilchen mit einem D50-Wert der Teilchengröße von höchstens 400 nm, vorzugsweise von 100 - 350 nm vor. Der vorerwähnte D50-Wert der Teilchengröße bezeichnet eine Teilchengröße, bezüglich der 50 Gew.% des betreffenden Stoffs mit einer demgegenüber größeren Teilchengröße und 50 Gew.% mit einer demgegenüber kleineren Teilchengröße vorliegen. Da es sich bei den zuzusetzenden Schmierstoffpartikeln und bei den Partikeln der härtenden Komponente in Form von Titandioxid um in technischen Verfahren herzustellende bzw. nach technischen Verfahren sortierte pulverförmige Partikel handelt, wird üblicherweise eine glockenförmige oder annähernd Normalverteilungsform aufweisende Teilchengrößenverteilungskurve resultieren. Der D50-Wert der Teilchengröße wird dann in der Nähe des Maximums der glockenförmigen Verteilungskurve liegen. Es erweist sich im Sinne der vorliegenden Erfindung als vorteilhaft, wenn die glockenförmige Verteilungskurve derart ist, dass sich wenigstens 60%, insbesondere wenigstens 70% und vorzugsweise wenigstens 80 Gew.% des betreffenden Stoffs mit einer Teilchengröße innerhalb eines Teilchengrößenbereichs um das Glockenmaximum herum oder um den D50-Wert herum von $\pm$ 50% dieses Werts vorliegen, also beispielsweise bei einem D50-Wert von 330 nm in einem Teilchengrößenbereich von 330nm $\pm$ 165 nm, also von 165 nm bis 495 nm.

Es hat sich des Weiteren als zweckmäßig erwiesen, wenn eine Teilchengrößenverteilung derart ist, dass der Summenrückstand in Gewichtsprozent bei einer Siebanalyse mit variierender Maschenweite t, insbesondere zwischen 1 $\mu$m und 100 nm, durch folgende Beziehung beschrieben werden kann:

$$S = 100 \cdot e^{-\left(\frac{t}{d}\right)^{\beta}}$$

wobei in besonders vorteilhafter Weise die charakteristische Korngröße d zwischen 0,34 und 0,54 $\mu$m und der Formparameter $\beta$ der Verteilung zwischen 2,4 und 3,4 beträgt. Eine bevorzugte Verteilung ist gekennzeichnet durch eine charakteristische Korngröße von 0,440 $\mu$m (440 nm) und einen Formparameter $\beta$ von 2,87.

Durch den Zusatz von Kohlenstofffasern wird der Formkörper bzw. dessen Kunststoffmatrix verstärkt, indem ihre Steifigkeit und Festigkeit, aber auch ihre Kriechfestigkeit erhöht wird. Ferner wird der Verschleißwiderstand durch Kohlenstofffasern erhöht. Besondere Bedeutung kommt auch dem Aspekt der Wärmeleitfähigkeit zu, der durch Kohlenstofffasern in dem Gleitschichtmaterial verbessert wird. Diese führen dazu, dass eine Überhitzung des Gleitschichtmaterials verhindert wird, indem die beim Betrieb unmittelbar an der Oberfläche des Formkörpers auftretende Reibungswärme an das Innere des Formkörpers abgeführt und an anderen Oberflächen des Formkörpers abgegeben werden kann.

Es wurde ferner festgestellt, dass bei dem erfindungsgemäßen Formkörper gerade für dessen Einsatz unter Extremlastbedingungen auf den Zusatz von PTFE, das in üblichen Gleitwerkstoffen zwischen 2 und 15 Gew.-% vorhanden ist, verzichtet werden kann. Es wird davon ausgegangen, dass der an sich erwünschte Einfluss von PTFE auf die tribologischen Eigenschaften einer Werkstoffzusammensetzung von der beanspruchten Komponente Zinksulfid oder Bariumsulfat erbracht wird. Es können aber auch geringe Mengen an PTFE im Prozentbereich zugesetzt sein.

Es hat sich nach einer bevorzugten Ausführungsform der Erfindung als besonders vorteilhaft erwiesen, wenn es sich bei den Kohlenstofffasern um Kurzfasern einer Länge von 50 bis 250 $\mu$m, insbesondere von 60 bis 150 $\mu$m handelt. Es wurde nämlich erfindungsgemäß festgestellt, dass solchenfalls eine homogene Verteilung der Kohlenstofffasern im Gleitschichtmaterial erreicht wird. Hierdurch kann die Wärmeleitfähigkeit weiter verbessert werden, indem die an der Oberfläche des Formkörpers, also an dessen Gleitfläche entstehende Wärme besser von der Oberfläche effektiv abgeleitet werden kann. Es haben sich hierbei Kohlenstofffasern mit einer Dicke von 8 bis 15 $\mu$m als vorteilhaft erwiesen.

Der gewichtsprozentuale Anteil der Kohlenstofffasern wiederum bezogen auf die Masse des Gleitschichtmaterials beträgt vorzugsweise 5 bis 25 Gew.-%, insbesondere 5 - 15 Gew.-%.

Es hat sich des weiteren als vorteilhaft erwiesen, wenn das Gleitschichtmaterial Zusätze von Graphitpartikeln in einem gewichtsprozentualen Anteil bezogen auf die Masse des Gleitschichtmaterials von 5 bis 15 Gew.-% aufweist. Die Graphitpartikel sollten vorzugsweise als feine Partikel einer Teilchengröße bis maximal 15 $\mu$m, insbesondere 1 - 15 $\mu$m, vorzugsweise 1 - 5 $\mu$m vorliegen.

Weitere Merkmale, Einzelheiten und Vorteile der Erfindung ergeben sich aus den Patentansprüchen und der zeichnerischen Darstellung und nachfolgenden Beschreibung von Werkstoffzusammensetzungen und deren Eigenschaften. In der Zeichnung zeigt:

Figur 1    die graphische Darstellung der Messung der Verschleißrate;

Figur 2    einige beispielhafte Darstellungen von Formkörpern.

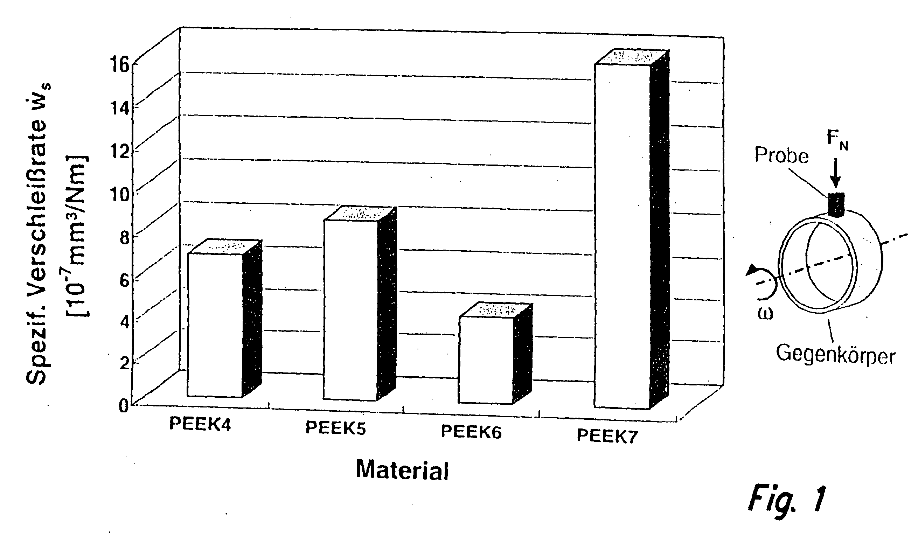

Die nachfolgend gewonnenen Prüfergebnisse wurden auf einem Block-auf-Ring-Prüfstand (in der Figur 1 angedeutet) erhalten.

Es wurde ein im Handel erhältliches Gleitschichtmaterial mit PEEK als matrixbildender Kunststoffkomponente und der Zusammensetzung, die aus der nachfolgenden Tabelle unter der Bezeichnung PEEK 4 ersichtlich ist, als Vergleichsmaterial untersucht. Die Kohlenstofffasern des Werkstoffs PEEK 4 haben eine Länge von 1000 $\mu$m - 5000 $\mu$m.

| Bezeichnung | Matrix | ZnS Gew.-% | C-Fasern Gew.-% | PTFE Gew.-% | Graphit Gew.-% | TiO$_2$ Gew.-% |
|---|---|---|---|---|---|---|
| PEEK 4 | Rest PEEK | - | 10 | 10 | 10 | - |
| PEEK 5 | Rest PEEK | 10 | 10 | 10 | - | - |
| PEEK 6 | Rest PEEK | 10 | 10 | - | 10 | 10 |
| PEEK 7 | Rest PEEK | 10 | - | - | 10 | 5 |

Sodann wurden Formkörper mit den Bezeichnungen PEEK 5, 6, 7 mit Zusammensetzungen des Gleitschichtmaterials, die ebenfalls aus der nachfolgenden Tabelle ersichtlich sind, getestet.

Die Figur zeigt die Prüfergebnisse zur spezifischen Verschleißrate, gemessen auf einem Block-auf-Ring-Prüfstand. Dabei bildet das Gleitschichtmaterial als dreidimensionaler Formkörper den "Block"

| | |
|---|---|
| Versuchsdauer | 20 h |
| Flächenpressung | 1 MPa |
| Gleitgeschwindigkeit | 1,0 m/s |
| Gegenkörper | 100Cr6, $R_a$ = 0,1-0,2 $\mu$m |
| Schmierung Raumtemperatur | ungeschmiert |

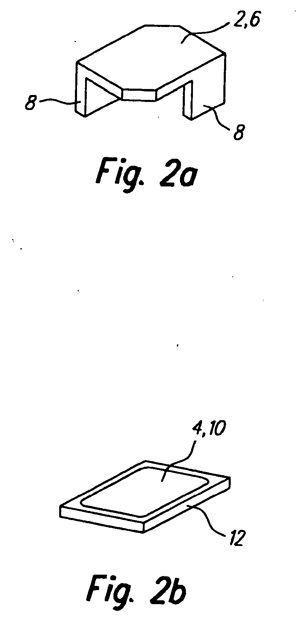

Die Messungen zeigen, dass bei der Prüfung nach Figur 2 der erfindungsgemäße Formkörper aus PEEK 6 gegenüber den Vergleichswerkstoffen eine geringere spezifische Verschleißrate, also einen höheren Verschleißwiderstand aufweist.

Bei anderen Prüfungen wurde festgestellt, dass der erfindungsgemäße Formkörper aus "PEEK 6" sich gerade bei hohen Flächenpressungen, also hohen Belastungen als den Vergleichswerkstoffen überlegen darstellt. Insbesondere wird deutlich, dass die Weglassuhg der Kohlenstofffasern und die Reduzierung von TiO$_2$ bei "PEEK 7" im Vergleich zu "PEEK 6" sich negativ auf den Verschleißwiderstand auswirkt, also die Verschleißrate erhöht. Hingegen bewirkt die Zugabe von TiO$_2$ bei PEEK 6 ausgehend von PEEK 5, welches kein TiO$_2$ aufweist, eine Verringerung der Verschleißrate des Formkörpers. Üblicherweise führt aber die Zugabe von TiO$_2$ zu Gleitlagern in an sich unerwünschter Weise zu Schäden an der Oberfläche des

Gleitpartners, also beispielsweise an einer Welle. Diese Schäden treten bei Verwendung eines erfindungsgemäßen Formkörpers aber überraschenderweise nicht auf. Durch die Zugabe von Zinksulfid oder Bariumsulfat wird die Oberfläche des Gleitpartners geschützt, und gleichzeitig werden die Notlaufeigenschaften verbessert. Es wird aber auch davon ausgegangen, dass der erfindungsgemäßen Größenverteilung des Schmierstoffs und auch der härtenden Komponente Titandioxid eine grundlegende Bedeutung für die vorstehend geschilderte Eigenschaft zukommt.

Bei einer anderen Prüfung wurde eine überlegene Temperaturbeständigkeit des erfindungsgemäßen Werkstoffs "PEEK 6" ermittelt.

Prüfungen des Reibkoeffizienten zeigten weiter, dass "PEEK 6" "PEEK 4" deutlich überlegen ist, und zwar im Besonderen bei höherem Anpressdruck, also höherer Belastung, und bei höheren Temperaturen (150°C). Unter Verwendung eines Formkörpers aus "PEEK 6" lassen sich Reibwerte realisieren, die nicht einmal mit einem Werkstoff erreicht werden, der zu 80 Vol.-% aus PTFE und zu 20 Vol.-% aus Blei besteht.

Eine bevorzugte Zusammensetzung des erfindungsgemäßen dreidimensionalen Formkörpers ist gegeben durch "PEEK 6" mit 10 Gew.-% ZnS, 10 Gew.-% Kohlenstofffasern, 10 Gew.-% Graphitpartikeln und 10 Gew.-% TiO$_2$ Rest PEEK. Zinksulfid als Schmierstoff und Titandioxid als härtender Stoff liegen bei den Werkstoffen PEEK 5, 6 und 7 in Form extrem feiner Partikel vor, wobei das Zinksulfid mit einer mittleren Partikelgröße mit einem D50-Wert von etwa 300 nm und das Titandioxid mit einer mittleren Partikelgröße mit einem D50-Wert von etwa 300 nm vorliegt. Hierdurch entstehen besonders feine homogene Strukturen und besonders geringe Reibwerte und Verschleißwerte. Die Kohlenstofffasern haben bei den Werkstoffen PEEK 5, 6 und 7 eine Länge von 50 bis 250 $\mu$m, vorzugsweise von 60 bis 150 $\mu$m, ihr mittlerer Durchmesser beträgt 8 bis 15 $\mu$m. Die Größe der Graphitpartikel liegt bei bis zu 15 $\mu$m, insbesondere bei 1 - 15 $\mu$m, vorzugsweise bei 1- 5 $\mu$m . PEEK bildet dann den Rest des Kunststoffgleitlagermaterials. Umgerechnet auf eine volumenprozentuale Zusammensetzung ergibt sich, dass der volumenprozentuale Anteil der PEEK-Matrix vorzugsweise zwischen 55 und 90 Vol.-% liegt. Eine bevorzugte Zusammensetzung besteht aus 75 Vol.-% PEEK, 4 Vol.-% ZnS, 10 Vol.-% Kohlenstoffkurzfasern, 7 Vol.-% Graphit und 4 Vol.-% TiO$_2$.

Nach einem an sich selbständigen Erfindungegedanken wird ein Formkörper vorgeschlagen, der eine matrixbildende Kunststoffkomponente nicht notwendigerweise in Form von PEEK oder PPS oder PA aufweist und ebenfalls den Schmierstoff in Form von Zinksulfid und/oder Bariumsulfat und die härtende Komponente in Form von Titandioxid und zusätzlich Kohlenstofffasern aufweist und bei dem der gewichtsprozentuale Anteil des Schmierstoffs und der härtenden Komponente bezogen auf die Masse des Gleitschichtmaterials jeweils 5 - 15 Gew.-% beträgt und bei dem der Schmierstoff und die härtende Komponente in Form feiner Teilchen mit einem D50-Wert der Teilchengröße von höchstens 500 nm vorliegt. Wenn nämlich der konkrete Schmierstoff gemeinsam mit Titandioxid und der angegeben Teilchengröße eingesetzt wird, so lassen sich auch mit anderen Kunststoffkomponenten je nach Anforderung zufriedenstellende Ergebnisse erreichen, die jedoch an die hervorragenden Eigenschaften von z.B. PEEK als Kunststoffkomponente im Zusammenwirken mit ZnS oder $BaSO_4$ und $TiO_2$ nicht herankommen.

Figur 2 a und b zeigen zwei beispielhafte Formkörper 2 und 4. Der Formkörper 2 nach Figur 2a ist in Form eines Gleitschuhs ausgebildet. Er umfasst einen Gleitteil 6 beispielsweise der unmittelbar vorausgegangenen Abschnitt beschriebenen Zusammensetzung. Dieser ist im wesentlichen scheibenförmig oder quaderförmig ausgebildet. Es handelt sich um ein Kunststoff-Spritzgussteil. Der Formkörper 2 weist ferner einen Halteteil 8 auf, der insbesondere einstückig mit dem Gleitteil oder aus einem anderen Kunststoff, insbesondere aus PA oder aus Metall, beschaffen sein kann. Der Halteteil kann nach Art eines Clip ausgebildet sein, so dass der Formkörper 2 auf einen anderen Gegenstand aufgeklipst werden kann.

Der Formkörper 4 nach Figur 2b ist ebenfalls quaderförmig als Gleitkissen ausgebildet. Er umfasst einen Gleitteil 10, der insbesondere flächenbündig in einen Kunststoffhalteteil 12 eingelassen, insbesondere eingespritzt ist. Der Gleitteil 10 könnte aber auch mechanisch an dem Kunststoffhalteteil 12 befestigt sein.

Auch andere Formen des Formkörpers sind denkbar, wie beispielsweise Schalenform, einschließlich Halbkugelschalenform, Buchsen- oder Bundbuchsenform. Der Formkörper könnte auch als ein Zahnrad oder als ein sonstiges Getriebeteil ausgebildet sein

## Patentansprüche

1. Dreidimensionaler Formkörper (2) für gleitende Beanspruchung bestehend aus einem Gleitschichtmaterial auf Kunststoffbasis mit einem Schmierstoff, wobei der Formkörper ein Spritzgußteil ist, **dadurch gekennzeichnet, dass** das Gleitschichtmaterial PEEK oder PPS oder PA als matrixbildende Kunststoffkomponente und ferner den Schmierstoff in Form von Zinksulfid und/oder Bariumsulfat und eine härtende Komponente in Form von Titandioxid und zusätzlich Kohlenstofffasern aufweist und dass der gewichtsprozentuale Anteil des Schmierstoffs und der härtenden Komponente bezogen auf die Masse des Gleitschichtmaterials jeweils 5 - 15 Gew.-% beträgt und dass der Schmierstoff und die härtende Komponente in Form feiner Teilchen mit einem D50-Wert der Teilchengröße von höchstens 500 nm vorliegt.

2. Formkörper nach Anspruch 1, **dadurch gekennzeichnet, dass** der Schmierstoff und die härtende Komponente in Form feiner Teilchen mit einem D50-Wert der Teilchengröße von höchstens 400 nm, insbesondere von 100 - 350 nm vorliegt.

3. Formkörper nach Anspruch 1 oder 2, **dadurch gekennzeichnet, dass** die Kohlenstofffasern eine Länge von 50 - 250 $\mu$m, insbesondere 60 - 150 $\mu$m aufweisen.

4. Formkörper nach Anspruch 1, 2 oder 3, **dadurch gekennzeichnet, dass** die Kohlenstofffasern eine Dicke von 8 - 15 $\mu$m aufweisen.

5. Formkörper nach einem der vorstehenden Ansprüche, **dadurch gekennzeichnet, dass** der gewichtsprozentuale Anteil der Kohlenstofffasern bezogen auf die Masse des Gleitschichtmaterials 5 -25 Gew.-%, insbesondere 5 - 15 Gew.-% beträgt.

6. Formkörper nach einem der vorstehenden Ansprüche, **dadurch gekennzeichnet, dass** das Gleitschichtmaterial Zusätze von Graphitpartikeln in einem gewichtsprozentualen Anteil bezogen auf die Masse des Gleitschichtmaterials von 5 - 15 Gew.-% aufweist.

7. Formkörper nach einem der vorstehenden Ansprüche, **dadurch gekennzeichnet, dass** er ein Trägerteil (8) aufweist oder an ein Trägerteil angefügt ist.

8. Formkörper nach einem der vorstehenden Ansprüche, **dadurch gekennzeichnet, dass** er an ein Trägerteil aus einem anderen Material, insbesondere aus einem anderen Kunststoff, angespritzt oder mechanisch, insbesondere schnappend, rastend, klemmend oder hintergreifend angefügt ist.

9. Formkörper nach einem der vorstehenden Ansprüche, **dadurch gekennzeichnet, dass** er im wesentlichen Quaderform oder Schalenform, einschließlich Halbkugelschalenform, Buchsen- oder Bundbuchsenform aufweist.

10. Gleitschuh oder Gleitkissen, umfassend einen dreidimensionalen Formkörper nach einem oder mehreren der vorstehenden Ansprüche.

11. Wälzkörper, umfassend einen dreidimensionalen Formkörper nach einem oder mehreren der vorstehenden Ansprüche.

12. Gleitleiste, umfassend einen dreidimensionalen Formkörper nach einem oder mehreren der vorstehenden Ansprüche.

**Claims**

1. Three-dimensional mould (2) for a sliding load made of a plastics material-based sliding layer material with a lubricant, the mould being an injection-moulded part, **characterised in that** the sliding layer material comprises PEEK or PPS or PA as a matrix-forming plastics material component and also comprises the lubricant in the form of zinc sulphide and/or barium sulphate, a curing component in the form of titanium dioxide and also carbon fibres, and **in that** the amount of lubricant and the curing component as a percent by weight based on the weight of the sliding layer material is from 5 to 15 % by weight in each case, and **in that** the lubricant and the curing component are present in the form of fine particles, the particle size thereof having a D50 value of, at most, 500 nm.

2. Mould according to claim 1, **characterised in that** the lubricant and the curing component are present in the form of fine particles, the particle size thereof having a D50 value of, at most, 400 nm, in particular from 100 to 350 nm.

3. Mould according to either claim 1 or claim 2, **characterised in that** the carbon fibres are from 50 to 250 $\mu$m, in particular from 60 to 150 $\mu$m long.

4. Mould according to claim 1, 2 or 3, **characterised in that** the carbon fibres are from 8 to 15 $\mu$m thick.

5. Mould according to any one of the preceding claims, **characterised in that** the amount of carbon fibres as a percent by weight based on the weight of the sliding layer material is from 5 to 25 % by weight, in particular 5 to 15 % by weight

6. Mould according to any one of the preceding claims, **characterised in that** the sliding layer material also comprises additions of graphite particles measured as a percent by weight based on the weight of the sliding layer material of from 5 to 15 % by weight

7. Mould according to any one of the preceding claims, **characterised in that** it comprises a carrier component (8) or is attached to a carrier component.

8. Mould according to any one of the preceding claims, **characterised in that** it is attached to a carrier component made of another material, in particular another plastics material, by means of spraying or by mechanical means, in particular in a snapping, locking, adhesive or engaging manner.

9. Mould according to any one of the preceding claims, **characterised in that** it has a substantially cuboid or shell shape, including a hemispherical shell shape, a sleeve shape or a flange sleeve shape.

10. Sliding block or sliding cushion comprising a three-dimensional mould according to one or more of the preceding claims.

11. Rolling element comprising a three-dimensional mould according to one or more of the preceding claims.

12. Sliding strip comprising a three-dimensional mould according to one or more of the preceding claims.

**Revendications**

1. Corps moulé (2) tridimensionnel pour une charge coulissante, composé d'un matériau de couche de glissement à base de matière plastique avec un lubrifiant, le corps moulé étant une pièce d'injection, **caractérisé en ce que** le matériau de couche de glissement contient du PEEK ou du PPS ou du PA en tant que composante plastique formant la matrice ainsi que le lubrifiant sous la forme de sulfure de zinc et/ou de sulfate de baryum, un composant durcisseur sous la forme de dioxyde de titane et en outre des fibres de carbone, **en ce que** le pourcentage pondéral de lubrifiant et le pourcentage pondéral de composant durcisseur rapportés à la masse de matériau de couche de glissement s'élèvent chacun à 5 à 15 % en poids et **en ce que** le lubrifiant et le composant durcisseur sont présents sous la forme de fines particules de diamètre médian inférieur ou égal à 500 nm.

2. Corps moulé selon la revendication 1, **caractérisé en ce que** le lubrifiant et le composant durcisseur sont présents sous la forme de fines particules de diamètre médian inférieur ou égal à 400 nm, notamment compris entre 100 et 350 nm.

3. Corps moulé selon la revendication 1 ou 2, **caractérisé en ce que** les fibres de carbone ont une longueur comprise entre 50 et 250 μm, notamment entre 60 et 150 μm.

4. Corps moulé selon la revendication 1, 2 ou 3, **caractérisé en ce que** les fibres de carbone ont une épaisseur comprise entre 8 et 15 μm.

5. Corps moulé selon l'une quelconque des revendications précédentes, **caractérisé en ce que** le pourcentage pondéral de fibres de carbone rapporté à la masse de matériau de couche de glissement est compris entre 5 et 25 % en poids, notamment entre 5 et 15 % en poids.

6. Corps moulé selon l'une quelconque des revendications précédentes, **caractérisé en ce que** le matériau de la couche de glissement contient des additifs sous la forme de particules de graphite selon un pourcentage pondéral compris entre 5 et 15 % en poids rapporté à la masse du matériau de la couche de glissement.

7. Corps moulé selon l'une quelconque des revendications précédentes, **caractérisé en ce qu'**il comporte une pièce support (8) ou qu'il est rapporté sur une pièce support.

8. Corps moulé selon l'une quelconque des revendications précédentes, **caractérisé en ce qu'**il est rapporté par injection ou selon un procédé mécanique, notamment par enclipsage, encliquetage, serrage ou engagement par l'arrière sur une pièce support en un autre matériau, notamment en une autre matière plastique.

9. Corps moulé selon l'une quelconque des revendications précédentes, **caractérisé en ce qu'**il présente essentiellement la forme d'un parallélépipède ou d'une cuvette, en ce compris la forme d'une cuvette hémisphérique, la forme d'un coussinet ou la forme d'un coussinet à collerette.

10. Patin ou coussin de glissement, comportant un corps moulé tridimensionnel selon une ou plusieurs des revendications précédentes.

11. Élément de roulement comprenant un corps moulé tridimensionnel selon l'une ou plusieurs des revendications précédentes.

12. Glissière comprenant un corps moulé tridimensionnel selon l'une ou plusieurs des revendications précédentes.

Fig. 1

2,6

8

8

## Fig. 2a

4,10

12

## Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3736292 A1

- WO 03103955 A